# EUROPÄISCHE PATENTANMELDUNG

(11) **EP 0 802 244 A1**
(43) Veröffentlichungstag der Anmeldung: **22.10.1997**
(21) Anmeldenummer: 97106559.4
(22) Anmeldetag: 21.04.1997
(51) Int. Cl.: C09D 7/06, C09D 201/00, C09D 105/16, C09D 7/12, C09D 5/02, C09D 175/04

(54) **Verfahren zur Verbesserung des Glanzes und des Verlaufes von Lacken**

(30) Priorität: 19.04.1996 DE 19615494
(71) Anmelder: BASF Lacke + Farben AG, 48165 Münster-Hiltrup (DE)
(72) Erfinder: Wegner, Egon, 48143 Münster (DE); Stein, Ralf, 48153 Münster (DE); Gross, Lutz-Werner, 45721 Haltern (DE)
(74) Vertreter: Fitzner, Uwe, Dr.

(57) **Zusammenfassung**

Die vorliegende Erfindung betrifft ein Verfahren Verfahren zur Herstellung eines wasserverdünnbaren Lacks mit verbessertem Glanz und Verlauf enthaltend
a) als Bindemittel vorzugsweise wenigstens ein wasserverdünnbares Polyurethanharz, Polyesterharz, Epoxidharz, acryliertes Polyurethanharz, Mikrogele oder Polyacrylatharz, ausgenommen Latices, oder ein Gemisch zweier oder mehrerer dieser Bindemittel und
b) ggfs. wenigstens einem Vernetzer, vorzusweise Aminoplastharze oder blockierte Isocyanate, wobei dem Lack Cyclodextrin zugesetzt wird.

## Beschreibung

Die Erfindung bezieht sich auf wäßrige Lacke und deren Verwendung zur Herstellung von Füllerschichten bei der Automobillackierung.

Automobilkarosserien werden lackiert, indem eine Elektrotauchlackschicht, eine Füllerschicht und eine oder zwei Decklackschichten übereinanderlackiert und in mehreren Einbrennschritten nacheinander eingebrannt werden. Üblicherweise wird in einem ersten Schritt die Elektrotauchlackschicht abgeschieden und eingebrannt. Danach wird die eingebrannte Elektrotauchlackschicht mit einer Füllerschicht überlackiert. Diese Füllerschicht wird eingebrannt und mit einer ein- oder zweischichtigen Decklackschicht überlackiert. Schließlich wird die Decklackschicht eingebrannt. Zweischichtige Decklackschichten bestehen aus einem pigmentierten Basislack und einem überlackierten Klarlack. Zweischichtige Decklackierungen werden üblicherweise im Naß- in Naß-Verfahren appliziert, d.h. es wird zunächst eine pigmentierte Basislackschicht hergestellt, die im nicht eingebrannten Zustand mit dem Klarlack überlackiert wird. Anschließend werden die pigmentierte Basislackschicht und die Klarlackschicht gemeinsam eingebrannt. Es ist jedoch auch möglich, beispielsweise die abgeschiedene Elektrotauchlackschicht im nicht eingebrannten Zustand mit einer Füllerschicht überzulackieren und anschließend Elektrotauchlackschicht und Füllerschicht gemeinsam einzubrennen. Dann kann auf die eingebrannte Füllerschicht eine ein- oder zweischichtige Decklackschicht lackiert und eingebrannt werden. Weiterhin ist es möglich, die Füllerschicht auf eine nicht eingebrannte oder eine eingebrannte Elektrotauchlackschicht zu appplizieren und auf die nicht eingebrannte Füllerschicht die pigmentierte Basislackschicht für eine zweischichtige Decklackierung aufzubringen und anschließend die Füllerschicht und die pigmentierte Basischicht sowie gegebenenfalls die Elektrotauchlackschicht gemeinsam einzubrennen. Auf die eingebrannte pigmentierte Basislackschicht kann dann eine Klarlackschicht aufgebracht und eingebrannt werden.

Bei der Automobillackierung hat die Füllerschicht insbesondere die Aufgabe, Unebenheiten der Elektrotauchlackschicht auszufüllen und abzudecken, um den Untergrund für die nachfolgende Decklackschicht zu egalisieren.

Je besser diese Ausfüllung und Abdeckung von Unebenheiten in der Elektrotauchlackschicht ist, desto besser ist die optische Qualität der Gesamtlackierung. Neben der optischen Qualität sind auch wichtige mechanisch-technologische Eigenschaften der Gesamtlackierung, wie z.B. Korrosionsschutz und vor allem die Resistenz gegen Steinschlag und andere mechanische Angriffe, ganz entscheidend von der Qualität der Füllerschicht abhängig. Eine weitere wichtige Anforderung an die Füllerschicht beruht darauf, daß die Glasscheiben einer Automobilkarosserie in die Fensterrahmen der Karosserie eingeklebt werden, wobei oft die Füllerschicht als Untergrund dient.

Aus der europäischen Patentanmeldung 0 460 896 ist es bekannt, cyclodextrinhaltige Fettiger für wäßrige Systeme einzusetzen. In den Beispielen bezieht sich der Einsatz dieser Verdicker im wesentlichen auf wäßrige Latexformulierungen. Demonstriert wird in dieser Anmeldung ferner die Verwendung von Cyclodextrinen für die Reduzierung von Schaum in Latexfarben. Das Problem der Oberflächenstörungen, insbesondere der Kraterbildung wird jedoch in dieser Anmeldung nicht erörtert.

Die der vorliegenden Erfindung zugrundeliegende Aufgabenstellung besteht in der Bereitstellung eines Verfahrens zur Herstellung eines wasserverdünnbaren Lacks mit verbessertem Glanz und Verlauf enthaltend
a) als Bindemittel vorzugsweise wenigstens ein wasserverdünnbares Polyurethanharz, Polyesterharz, Epoxidharz, acryliertes Polyurethanharz, Mikrogele oder Polyacrylatharz, ausgenommen Latices, oder ein Gemisch zweier oder mehrerer dieser Bindemittel und
b) ggfs. wenigstens einem Vernetzer, vorzugsweise Aminoplastharze oder blockierte Isocyanate.

Diese Aufgabe wird dadurch gelöst, daß dem Lack Cyclodextrin zugesetzt wird.

Die vorliegende Erfindung betrifft weiterhin einen wasserverdünnbaren Lack zur Herstellung eines Überzugs mit verbessertem Glanz und Verlauf enthaltend
a) als Bindemittel vorzugsweise wenigstens ein wasserverdünnbares Polyurethanharz, Polyesterharz, acrylierte Polyurethanharze oder Mikrogele, Epoxidharz oder Polyacrylatharz, ausgenommen Latices, oder ein Gemisch zweier oder mehrerer dieser Bindemittel und
b) ggfs. Vernetzer, vorzugsweise Aminoplastharze oder blockierte Isocyanate,
dadurch gekennzeichnet, daß er als weitere Komponente Cyclodextrin enthält.

Als Cyclodextrine sind im Prinzip alle bekannten Modifikationen einsetzbar. Insbesondere können α-,β-, γ-Cyclodextrine, ethoxylierte Cylcodextrine, propoxylierte Cyclodextrine zum Einsatz kommen. Vorzugsweise werden Hydroxyethylcyclodextrine oder Hydroxypropylcyclodextrine verwendet.

In einer bevorzugten Ausführungsform der Erfindung liegt der Anteil an Cyclodextrinen bezogen auf den Bindemittelanteil des Lackes bei 0,5 bis 20 Gew.-%, vorzugsweise 1 bis 10 Gew.-%.

Die erfindungsgemäßen wasserverdünnbaren Beschichtungszusammensetzungen können im Prinzip alle für wasserverdünnbare Beschichtungszusammensetzungen geeigneten Bindemittel enthalten.

Als Bindemittel sind demgemäß sowohl veredelte Naturprodukte, z.B. aus Kolophonium und Ölen oder Cellulosenitraten als auch vollsynthetisch aufgebaute Harze verwendbar. Zu letzteren zählen u.a. Phenolharze, Aminharze (z.B. Harnstoff-, Melaminharze), Alkydharze, Polyvinylacetate, Epoxidharze, Polyurethanharze, Polyesterharze, mit Kolophonium modifizierte Phenolharze, Chlorkautschuke, chloriertes Polypropylen, Cyclokautschuke, Ketonharze und Acrylatharze.

Insbesondere werden als Bindemittel wasserverdünnbare bzw. wasserdispergierbare und in organischer Lösung darstellbare Polyurethanharze, Polyacrylatharze, Polyesterharze und Aminoplastharze sowie deren Mischungen eingesetzt.

Die als Bindemittel eingesetzten Polyacrylatharze sind ebenfalls bekannt und beispielsweise in DE-OS 3832826 beschrieben. Geeignet sind allgemeine wasserverdünnbare bzw. wasserdispergierbare Polyacrylatharze, die sich in Form organischer Lösungen darstellen lassen.

Als Bindemittel geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Die als Bindemittel eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze:
EP-A-355433, DE-OS 3545618, DE-OS 3813866 sowie die noch nicht veröffentliche deutsche Patentanmeldung DE 4005961.8.
Bezüglich näherer Einzelheiten der Herstellung der Polyurethanharze und Beispiele geeigneter Verbindungen sei daher auf diese Schriften verwiesen.

Als Bindemittel können selbstverständlich auch Mischungen der genannten Bindemittel sowie zusätzlich oder alleine andere wasserverdünnbare bzw. wasserdispergierbare Bindemittel eingesetzt werden.

In einer besonders bevorzugten Ausführungsform wird ein Polyurethanharz eingesetzt, das herstellbar ist, indem
a) in einer ersten Stufe ein isocyanatgruppenhaltiges Präpolymer (I) hergestellt, und
b) in einer zweiten Stufe ein Teil der in dem Präpolymer (I) enthaltenen freien Isocyanatgruppen mit einem Blockierungsmittel oder einer Mischung aus Blockierungsmitteln umgesetzt werden, so daß ein blockiertes Isocyanatgruppen enthaltendes Präpolymer (II) entsteht.

Im einzelnen ist das wasserverdünnbare Polyurethanharz herstellbar, indem in einer ersten Stufe
a) ein Polyisocyanat oder ein Gemisch aus Polyisocyanaten und
b) eine Verbindung, die mindestens eine gegenüber Isocyanatgruppen reaktive und mindestens eine zur Anionenbildung befähigte saure Gruppe im Molekül aufweist oder ein Gemisch aus solchen Verbindungen und
c) gegebenenfalls ein Polyester- und/oder Polyetherpolyol mit einem zahlenmittleren Molekulargewicht von 400 bis 5000 oder ein Gemisch aus solchen Polyester- und/oder Polyetherpolyolen und
d) gegebenfalls ein Polyol mit einem zahlenmittleren Molekulargewicht von 60 bis 399 oder ein Gemisch aus solchen Polyolen
zu einem isocyanatgruppenhaltigen Präpolymeren (I) umgesetzt werden, wobei die Komponenten (a), (b), (c) und (d) in einem solchen Mengenverhältnis miteinander umgesetzt werden, daß die Isocyanatgruppen und die gegenüber Isocyanatgruppen reaktiven Gruppen in einem Äquivalentverhältnis von 1,04:1,00 bis 10,00:1,00 vorliegen und das aus (a), (b), (c), (d), (e), (f) und (g) hergestellte Polyurethanharz eine Säurezahl von 18 bis 70 aufweist, in einer zweiten Stufe ein Teil der im Präpolymeren (I) enthaltenen freien Isocyanatgruppen mit
e) einem Blockierungsmittel oder einer Mischung aus Blockierungsmitteln
umgesetzt wird, so daß ein blockierte Isocyanatgruppen enthaltendes Präpolymer (II) entsteht, wobei die Komponente (e) in einer solchen Menge eingesetzt wird, daß das Präpolymer (II) im statistischen Mittel mindestens noch eine freie Isocyanatgruppe pro Molekül enthält, das Präpolymer (II) gegebenenfalls mit
f) 2,0 - 400 Gew.-%, bezogen auf die Menge an Präpo-lymer (II), eines aus einem Polyisocyanat, das im statistischen Mittel mehr als 2,0 Isocyanatgruppen pro Molekül enthält und frei von zur Anionenbil-dung befähigten sauren Gruppen ist, oder aus einer Mischung aus solchen Polyisocyanaten und der Komponente (e) hergestellten teilblockierten Polyisocyanates
vermischt wird, das Präpolymer (II) bzw. die Mischung aus Präpolymer (II) und Komponente (f) mit
g) einer Verbindung, die mindestens eine primäre oder sekundäre Aminogruppe und mindestens eine Hydroxylgruppe im Molekül enthält oder einer Mischung aus solchen Verbindungen
zu einem Polyurethanharz umgesetzt wird, wobei die Komponente (g) in einer solchen Menge eingesetzt wird, daß die freien Isocyanatgruppen des Präpolymeren (II) bzw. die freien Isocyanatgruppen der Mischung aus Präpolymer (II) und Komponente (f), die Aminogruppen der Komponente (g) und die Hydroxylgruppen der Komponente (g) in einem Äquivalentverhältnis von 1,00:0,15 bis 5,00:0,15 bis 5,00 stehen und schließlich das so hergestellte Polyurethanharz durch zumindest teilweise Neutralisation der zur Anionenbildung befähigten sauren Gruppen in ein wasserverdünnbares Polyurethanharz überführt wird.

Die Umsetzung der Komponenten (a), (b), (c) und (d) erfolgt nach gut bekannten Methoden der Polyurethanchemie in Substanz oder einem organischen Lösemittel, vorzugsweise in Gegenwart von Katalysatoren wie z.B. Dibutylzinndilaurat, Dibutylzinnmaleat, tertiären Aminen usw.

Als Komponente (a) können aliphatische und/oder cycloaliphatische und/oder aromatische und/oder araliphatische Polyisocyanate eingesetzt werden. Als Beispiele für aromatische und araliphatische Polyisocyanate werden Phenylendiisocyanat, Toluylendiisocyanat, Xylylendiisocyanat, Biphenylendiisocyanat, Naphtylendiisocyanat, Diphenylmethandiisocyanat und Tetramethylxyloldiisocyanat (TMXDI) genannt.
Aufgrund ihrer guten Beständigkeit gegenüber ultraviolettem Licht ergeben (cyclo)aliphatische Polyisocyanate Produke mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisoyanat. Aliphatische Diisocyanate sind Verbindungen der Formel 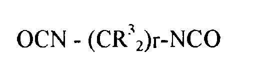 worin r eine ganze Zahl von 2 bis 20, insbesondere 6 bis 8 ist und R 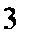 , das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethyl-ethylendiisocyanat, Dimethylethyldiisocyanat, Methyl-trimethylendiisocyanat und Trimethylhexandiisocanat. Isophorondiisocyanat und Dicyclohexylmethandiisocyanat werden bevorzugt eingesetzt.

Die Komponente (a) muß hinsichtlich der Funktionalität der Polyisocyanate so zusammengesetzt sein, daß kein vernetztes Polyurethanharz erhalten wird. Die Komponente (a) kann neben Diisocyanaten auch einen Anteil an Polyisocyanaten mit Funktionalitäten über zwei - wie z.B. Triisocyanate - enthalten. Eine Senkung der mittleren Funtionalität der Komponente (a) kann durch Zugabe von Monoisocyanaten wie z.B. Phenylisocyanat, Cyclohexylisocyanat und Stearylisocyanat erreicht werden. Als Triisocyanate haben sich Produkte bewährt, die durch Trimerisation oder Oligomerisation von Diisocyanaten oder durch Reaktion von Diisocyanaten mit Verbindungen, die mehrere OH- oder NH-Gruppen enthalten, entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethlyolpropan.

Als Komponente (b) werden vorzugsweise Verbindungen eingesetzt, die zwei gegenüber Isocyanatgruppen reaktive Gruppen und eine zur Anionenbildung befähigte saure Gruppe im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (b) können beispielsweise Alkansäuren mit zwei Substituenten am ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenwasserstoffatome. Beispiele für die Komponente (b) sind Dihydroxypropionsäure, Dihydroxybernsteinsäure und Dihydroxybenzoesäure. Eine besonders bevorzugte Gruppe von Alkansäuren sind die _,_-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2 Dimethylolbuttersäure und 2,2-Dimethylolpentansäure. Die bevorzugte Dihydroxyalkansäure ist 2,2 Dimethylolpropionsäure. Aminogruppenhaltige Verbindungen sind beispielsweise 2,5-Diaminovaleriansäure, 3,4-Diaminobezoesäure, 2,4-Diaminotoluolsulfonsäure und 2,4-Diaminodiphenylethersulfonsäure.

Als Komponente (c) können gesättigte und ungesättige Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel H(-0-(CHR¹)ₙ-)mOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im zahlenmittleren Molmassenbereich Mn von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin und Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Isododecyl-bernsteinsäure, Adipinsäure, Azealinsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säure können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder Addukte von Maleinsäureanhydrid an ungesättigte Fettsäuren anwesend sein.

Es können Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-0) aus. Hierbei ist n bevorzugt 4 bis 6 und der Sustituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte -Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als Komponente (d) können beispielsweise Polyole wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythtrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von 0 bis 30 Gewichtsprozent, vorzugsweise 0 bis 20 Gewichtsprozent, bezogen auf die eingesetzte Menge an Komponente (c) und (d) eingesetzt.

In einer zweiten Stufe wird ein Teil der im Präpolymeren (I) enthaltenen freien Isocyanatgtuppen mit
e) einem Blockierungsmittel oder einer Mischung aus Blockierungsmitteln
umgesetzt, so daß ein blockierte Isocyanatgruppen enthaltendes Präpolymer (II) entsteht, wobei die Komponente (e) in einer solchen Menge eingesetzt wird, daß das Präpolymer (II) im statistischen Mittel mindestens noch eine freie Isocyanatgruppe pro Molekül enthält.

Die Umsetzung des Präpolymeren (I) mit der Komponente (e) wird nach den gut bekannten Verfahren der Polyurethanchemie, vorzugsweise in einem organischen Lösemittel durchgeführt.

Als Komponente (e) können im Prinzip alle für Polyisocyanate geeigneten Blockierungsmittel eingesetzt werden. Als Beispiele werden genannt: Aliphatische Monoether von Alkandiolen, wie Ethyl-, Propyl- und Butylglykol; aliphatische Monoalkohole mit 1 bis 4 C-Atomen im Molekül wie Methanol, Ethanol, Propanol und Butanol, cycloaliphatische Monoalkohole, wie Cyclohexanol; aromatische Alkylalkohole, wie Phenylcarbinol; Phenolverbindungen, wie Phenol selbst und substituierte Phenole, wie Cresol, Nitrophenol, Chlorphenol und Ethylphenol; Amine, wie Di-n-butylamin, Di-sec.-butylamin, Dicyclohexylamin, Piperidin, 2-Methylpiperidin und 2,6-Dimethylpiperidin; Oxime, wie Acetonoxim, Butanonoxim, Diethylketoxim, Methylisobutylketoxim, Diisopropylketoxim, Cyclohexanonoxim, 2-Methylcyclohexanonoxim, 2,6-Dimethylcyclohexanonoxim, Acetophenonoxim; Lactame, wie - Caprolactam und CH-acide Verbindungen, wie Dialkylmalonate, Alkylacetoacetate, Acetylaceton; heterocyclische Verbindungen, wie Furfurylalkohol usw.

Als Komponente (e) werden vorzugsweise Oxime, wie Acetonoxim, Butanonoxim, Diehtylketoxim, Methylisobutylketoxim, Diisopropylketoxim, Cyclohexanonoxim, 2-Methylcyclohexanonoxim, 2,6-Dimethylcyclohexanonoxim und Acetophenonoxim, besonders bevorzugt Butanonoxim eingesetzt.

Bevor das Präpolymer (II) mit der Komponente (g) weiter umgesetzt wird, kann es gegebenenfalls mit
f) 2,0 - 400 Gew.-%, bezogen auf die Menge an Präpo-lymer (II), eines aus einem Polyisocyanat, das im statistischen Mittel mehr als 2,0 Isocyanatgruppen pro Molekül enthält und frei von zur Anionenbil-dung befähigten sauren Gruppen ist oder aus einer Mischung aus solchen Polyisocyanaten und der Komponente (e) hergestellten teilblockierten Polyisocyanates
vermischt werden.

Die Herstellung von teilblockierten Polyisocyanaten ist dem Fachmann gut bekannt. Als Komponente (f) wird vorzugsweise ein teilblockiertes Polyisocyanat, das im statistischem Mittel noch mindestens eine freie Isocyanatgruppe pro Molekül enthält eingesetzt. Die Mischung aus Präpolymer (II) und Komponente (f) kann hergestellt werden, indem die Komponente (f) separat hergestellt wird und mit dem Präpolymer (II) vermischt wird. Sie wird vorzugsweise hergestellt, indem das Präpolymer (II) mit einer entsprechenden Menge eines Polyisocyanates, das im statistischen Mittel mehr als 2,0 Isocyanatgruppen pro Molekül enthält und frei von zur Anionenbildung befähigten sauren Gruppen ist oder eine Mischung aus solchen Polyisocyanaten vermischt wird und anschließend ein Teil der Isocyanatgruppen des zugesetzten Polyisocyanats bzw. Polyisocyanatgemisches in Gegenwart des Präpolymeren (II) mit dem Blockierungsmittel (e) umgesetzt wird. Das Polyisocyanat bzw. Polyisocyanatgemisch kann zur Herstellung der Mischung aus Präpolymer (II) und Komponente (f) auch schon vor bzw. während der Umsetzung des Präpolymeren (I) mit der Komponente (e) zum Präpolymeren (II) bzw. dem Reaktionsgemisch aus Präpolymer (I) und Komponente (e) zugegeben werden. Diese Verfahrensweise ist jedoch, insbesondere dann, wenn die Reaktivität der Isocyanatgruppen im Präpolymeren (I) und im Polyisocyanat bzw. Polyisocyanatgemisch gegenüber der Komponente (e) sehr unterschiedlich ist, weniger bevorzugt.

Polyisocyanate, die im statistischen Mittel mehr als 2,0 Isocyanatgruppen pro Molekül enthalten und frei von zur Anionenbildung befähigten sauren Gruppen sind, sind bekannt. Als Beispiele für derartige Polyisocyanate werden durch Trimerisation oder Oligomerisation von Diisocyanaten oder durch Reaktion von Diisocyanaten mit polyfunktionellen Polyolen oder Polyaminen erhaltene Verbindungen genannt. Hierzu gehören beispielsweise das Biuret von Hexamethylendiisocyanat und Wasser, das Isocyanurat des Hexamethylendiisocyanats oder das Addukt von Isophorondiiscocyanat an Trimethylolpropan.

Die Umsetzung mit der Komponente (g) wird nach allgemein gut bekannten Methoden der Polyurethanchemie, vorzugsweise in einem organischen Lösemittel durchgeführt.

Als Komponente (g) kann im Prinzip jede Verbindung, die mindestens eine primäre oder sekundäre Aminogruppe und mindestens eine Hydroxylgruppe im Molekül enthält oder eine Mischung aus solchen Verbindungen eingesetzt werden. Als Beispiele für derartige Verbindungen werden genannt:

Ethanolamin, Propandiolamin, N-Methylethanolamin, N-Ethylethanolamin, N-Methylpropanolamin, N-Ethylpropanolamin, Diethanolamin, Dipropanolamin und N-Hydroxyethylaminobenzol sowie N-Hydroxyethylethylendiamin, N-Hydroxyethylpropylendiamin, N-Hydroxypropylethylendiamin, N-Hydroxypropylpropylendiamin, N,N'-Dihydroxyethylethylendiamin, N,N'-Dihydroxyethylpropylendiamin, N,N'-Dihydroxypropylethylendiamin, N,N'-Dihydroxypropylpropylendiamin sowie ethoxyliertes N,N'-Bis (3-aminopropyl) ethylendiamin und ethoxyliertes 4-Aminomethyl-1,8-octandiamin.

Um das auf die obenbeschriebene Art und Weise hergestellte Polyurethanharz in eine wasserverdünnbare Form zu überführen, wird wenigstens ein Teil der in dem Polyurethanharz enthaltenen zur Anionenbildung befähigten sauren Gruppen neutralisiert. Zur Neutralisation werden vorzugsweise flüchtige Amine eingesetzt. Hierbei sind die tertiären Amine bevorzugt, während Amoniak und primäre und sekundäre Amine weniger bevorzugt sind. Beispiele für geeignete Amine sind Trimethylamin, Triethylamin, Triisopropylamin, Tributylamin, N-Methylmorpholin, N-Methylpiperazin, N,N-Dimethylethanolamin, N,N-Diethylethanolamin, Triethanolamin, N-Methyldiethanolamin, Dimethylaminopropanol, und N-Hydroxyethylpiperazin.

Die auf die obenbeschriebene Art und Weise hergestellten erfindungsgemäß bevorzugten wasserverdünnbaren Polyurethanharze können mit anderen wasserverdünnbaren Bindemitteln, wie z.B. Polyesterharzen und/oder Aminoplastharzen und/oder Epoxidharzen und/oder Polyacrylatharzen usw. kombiniert werden. Beispiele für Kombinationsbindemittel (wobei unter Bindemittel sowohl "Hauptbindemittel" als auch "Vernetzungsmittel" verstanden werden), werden beispielsweise in folgenden Patentdokumenten offenbart: DE-A-40 05 961, EP-A-330 139, EP-A-339 433 und DE-A-33 18 595. Es ist bevorzugt, daß die erfindungsgemäßen wäßrigen Lacke neben dem erfindungsgemäß eingesetzten wasserverdünnbaren Polyurethanharz noch ein wasserverdünnbares Polyesterharz und ggf. zusätzlich ein Aminoplastharz enthalten.

Das vorzugsweise verwendbare wasserverdünnbare Polyurethanharz wird bevorzugt in einer Menge von 30 bis 70, vorzugsweise 30 bis 60 Gew.-%, das wasserverdünnbare Polyesterharz in einer Menge von 15 bis 60, vorzugsweise 30 bis 60 Gew.-% und das Aminoplastharz in einer Menge von 5 bis 35, vorzugsweise 5 bis 25 Gew.-% eingesetzt, wobei die Gew.-%-Angaben auf die Gesamtmenge an wasserverdünnbarem Polyurethanharz, wasserverdünnbarem Polyesterharz und Aminoplastharz = 100 Gew.-% bezogen sind. Als Aminoplastharze werden Melamin- und/oder Benzoguanaminharze verwendet. Derartige Harze sind für die Lackherstellung üblich und in großer Auswahl auf dem Markt erhältlich.

Der Fachmann kann unter Verwendung der oben beschriebenen Bindemittel unter Zuhilfenahme seines Fachwissens wäßrige Lacke formulieren, die zur Herstellung von Füllerschichten bei der Automobillackierung geeignet sind und die oben beschriebenen Vorteile aufweisen, d.h. bei Einsatz von cyclodextrinen nicht mehr zur Kraterbildung neigen.

Die erfindungsgemäßen Überzugsmittel können übliche Zusätze wie Lösungsmittel, Füllstoffe, Weichmacher, Stabilisatoren, Netzmittel, Dispergierhilfsmittel, Verlaufsmittel, Entschäumer und Katalysatoren, sowie Additive einzeln oder im Gemisch in den üblichen Mengen enthalten. Diese Substanzen können den Einzelkomponenten und/oder der Gesamtmischung zugesetzt werden.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate, Glasfasern, organische Fasern oder dergleichen.

Die erfindungsgemäßen Überzugsmittel können neben Wasser die üblichen Lösungsmittel, beispielsweise aliphatische oder aromatische Kohlenwasserstoffe, ein- oder mehrwertige Alkohole, Ether, Ester, Glykolether sowie deren Ester, Ketone wie z.B. Toluol, Xylol, Butanol, Ethyl- oder Butylglykol (= Ethylenglykolmonoethyl- oder -Butylether) sowie deren Acetate, Butyldiglykol (Ethylenglykoldibutylether), Ethylenglykoldimethylether, Diethylenglykoldimethylether, Cyclohexanon, Methylethylketon, Aceton, Isophoron oder Mischungen davon entalten.

Weiterhin können den erfindungsgemäßen Lacken vernetzte polymere Mikroteilchen, wie sie z.B. in der EP-A-38 127 offenbart sind und/oder übliche anorganische oder organische Additive zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifzierte ethoxylierte Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die erfindungsgemäßen Beschichtungszusammensetzungen können alle bekannten und in der Lackindustrie üblichen Pigmente oder Farbstoffe enthalten.

Die bereitgestellten wäßrigen Lacke können in jedem Verfahren zur Lackierung von Automobilkarosserien, bei dem eine Elektrotauchlackschicht, eine Füllerschicht und ein oder zwei Decklackschichten übereinanderlackiert und in mehreren Einbrennschritten nacheinander eingebrannt werden, zur Herstellung der Füllerschicht eingesetzt werden. Die mit den erfindungsgemäßen wäßrigen Lacken hergestellten Füllerschichten zeichnen sich nicht nur dadurch aus, daß sie nicht zur Kraterbildung neigen, sondern sie haben auch gute mechanisch-technologische Eigenschaften sowie guten Eigenschaften als Substrate für die Verklebung von Fensterscheiben in Automobilkarosserien.

Die beschriebenen erfindungsgemäßen Lacke können nach an sich bekannten Methoden, beispielsweise durch Spritzen, Streichen, Tauchen, Fluten, Rakeln oder Walzen auf beliebige Substrate, wie z.B. Metalle, Kunststoffe, Holz- oder Glas, appliziert werden. Sie werden vorzugsweise durch Spritzen zur Herstellung von Füllerschichten bei der Automobillackierung eingesetzt.

Die Erfindung wird in den folgenden Beispielen näher erläutert. Alle Angaben über Teile und Prozentsätze sind Gewichtsangaben, falls nicht ausdrücklich etwas anderes angegeben wird.

### Beispiele

Beschrieben wird hier der Einsatz von Cyclodextrin am Beispiel eines schwarzen Wasserfüllers. Cyclodextrin kann aber auch in anderen Wasserlacken wie zB UNI-Wasserbasislack eingesetzt werden.

### Herstellung einer wasserverdünnbaren Polyurethandispersion

In einen trockenen Reaktionskessel mit Thermometer und Rückflußkühler werden unter Stickstoff 383,6g einer 73%igen Lösung eines Polyesterpolyols mit einer Säurezahl von 3,5 bis 4,0, hergestellt aus 39,5 Gew.-Teilen dimerisierter Fettsäure (Pripol 1013, Hersteller: Unichema) 21,7 Gew.-Teilen Hexandiol-1,6 und 11,7 Gew.-Teilen Isophthalsäure) in Methylethylketon, 26,8g Dimethylolpropionsäure, 157,2g Dicyclohexylmethandiisocyanat (Desmodur W, Hersteller: Bayer AG) und 95,3g Methylethylketon eingewogen und auf 78°C erwärmt. Bei dieser Temperatur wird so lange gerührt, bis ein NCO-Gehalt von 2,5 bis 2,6% erreicht ist. Dann werden 17,4g Butanonoxim zugetropft und die Reaktionstemperatur wird für weitere zwei Stunden bei 78°C gehalten. Dann werden nacheinander 56,7g eines trimerisierten Hexamethylendiisocyanates (Basonat PLR8638, Hersteller: BASF AG) und 17,4g Butanonoxim zugegeben. Nachdem das Reaktionsgemisch eine weitere Stunde lang bei 78°C gerührt worden ist, werden zur Umsetzung der noch verbliebenen NCO-Gruppen 10,6g Diethanolamin zugegeben und noch so lange bei 78°C gerührt, bis keine freien NCO-Gruppen mehr nachweisbar sind. Zur Überführung des so hergestellten Polyurethanharzes in eine wasserverdünnbare Form werden bei 78°C nacheinander 56,6g Butyldiglykol, 15,3g N,N-Dimethylethanolamin und 743g deionisiertes Wasser zugegeben. Aus der so erhaltenen wäßrigen Dispersion wird anschließend das Methylethylketon bei 50 bis 60°C im Vakuum abdestilliert. Abschließend wird der pH-Wert der Dispersion mit N,N-Dimethylethanolamin auf 7,2 bis 7,5 und der Feststoffgehalt mit deionisiertem Wasser auf 37,7 Gew.-% eingestellt.

### Herstellung eines wasserverdünnbaren Polyesterharzes

In einen Reaktor, der mit einer Füllkörperkolonne, einem Kolonnenkopfaufsatz und einem Kolonnenkopfthermometer ausgestattet ist, werden unter Stickstoff 199,2g Isododecenylbernsteinsäureanhydrid, 471,7g Neopentylglykol, 114,0g Tetrahydrophthalsäureanhydrid, 130,0g Isophthalsäure und 23,0g Toluol eingewogen und langsam unter Rühren auf maximal 220°C erwärmt. Hierbei soll die Kolonnenkopftemperatur 105°C nicht übersteigen. Die Kondensationsreaktion wird bis zu einer Säurezahl von 10 bis 14 durchgeführt und anschließend das Schleppmittel (Toluol) abdestilliert. Bei 160°C werden dann 215,7g Trimellithsäureanhydrid zugegeben und bei 170°C bis zu einer Säurezahl von 52 kondensiert. Der Reaktionsansatz wird auf 120°C abgekühlt und mit 126,6g Butylglykol und 68,0g N,N-Dimethylethanolamin versetzt. Nach Abkühlung auf ca. 90°C wird mit 1549g deionisiertem Wasser verdünnt und mit N,N-Dimethylethanolamin und weiterem deionisierten Wasser auf einen pH-Wert von 7,2 und einen Feststoffgehalt von 41,0 Gew.-% eingestellt.

### Herstellung wäßriger Lacke

Gemäß den in Tabelle 1 angegebenen Gewichtsteilen wird die obenbeschriebene wäßrige Polyesterdispersion mit deionisiertem Wasser, mit einer Lösung eines handelsüblichen Antischaummittels auf Basis eines ungesättigten verzweigten Diols, gelöst in Butyldiglykol, mit Butyldiglykol sowie der obenbeschriebenen Polyurethandispersion versetzt und mit handelsüblichem, feinteiligen Bariumsulfat, oberflächenbehandeltem Talkum, ***Sicomixschwarz6190*** und einem handelsüblichen Flammruß angepastet. Diese Mischung wird in eine diskontinuierliche Sandmühle gefüllt und dispergiert, bis eine Feinheit von maximal 12 µm im Grindometer nach Hegmann erreicht ist. Aus der Dispergiermischung werden dann unter Zusatz eines niedrigmolekularen, mit Methanol hochveretherten Melaminharzes (Cymel 301, Hersteller: American Cyanamid Company), eines handelsüblichen Verlaufsmittels auf Basis eines wasserverdünnbaren Acrylatharzes und eines handelsüblichen, wasserverdünnbaren blockierten Isocyanates (Hersteller: Bayer AG) wäßrige Lacke hergestellt. Entsprechend Tabelle 1 werden diese Lacke mit unterschiedlichen Mengen Methyl-Beta-Cyclodextrin (0 bis 10 Gew.-%) (Hersteller: Wacker-Chemie) versetzt. Zur Applikation werden die Lacke mit N,N-Dimethylethanolamin auf einen pH-Wert von 7,2 bis 7,5 und mit deionisiertem Wasser aufeine Spritzviskosität von 33 sec (DIN4) eingestellt.

**Tabelle 1**

| | Lack 1 | Lack 2 | Lack 3 | Lack 4 | Lack 5 |
|---|---|---|---|---|---|
| Polyesterdispersion | 23,1 | 23,1 | 23,1 | 23,1 | 23,1 |
| deionisiertes Wasser | 8,3 | 8,3 | 8,3 | 8,3 | 8,3 |
| Antischlaummittel | 0,9 | 0,9 | 0,9 | 0,9 | 0,9 |
| Polyurethandispersion | 26,9 | 26,9 | 26,9 | 26,9 | 26,9 |
| Butyldiglykol | 1,0 | 1,0 | 1,0 | 1,0 | 1,0 |
| **Sicomixschwarz 6190** | 4,9 | 4,9 | 4,9 | 4,9 | 4,9 |
| Bariumsulfat | 16,8 | 16,8 | 16,8 | 16,8 | 16,8 |
| Talkum | 3,0 | 3,0 | 3,0 | 3,0 | 3,0 |
| Flammruß | 2,0 | 2,0 | 2,0 | 2,0 | 2,0 |
| Dispergiermischung | 86,9 | 86,9 | 86,9 | 86,9 | 86,9 |
| blockiertes Isocyanat | 7,9 | 7,9 | 7,9 | 7,9 | 7,9 |
| Melaminharz | 3,3 | 3,3 | 3,3 | 3,3 | 3,3 |
| **ByketolWS= Verlaufsmittel** | 1,9 | 1,9 | 1,9 | 1,9 | 1,9 |
| Methy-Beta-Cyclodextrin | 0,0 | 1,0 | 2,5 | 5,0 | 10,0 |
| Lack 1 bis 5 = Lacke mit unterschiedlicher Menge Methyl-Beta-Cyclodextrin. Lack 6 (= Vergleichsbeispiel): Lack 3 wird anstatt mit 2,5 Gew.-Teilen Methyl-Beta-Cyclodextrin mit 2,9 Gew.-Teilen Polyesterdispersion (= 1,2 Gew.-Teile Feststoff) und 3,4 Gew.-Teilen Polyurethandispersion (= 1,3 Gew.-Teile Feststoff) versetzt. | | | | | |

### Applikation und Prüfung der wäßrigen Lacke

Die in Tabelle 1 beschriebenen wäßrigen Lacke werden mit einer Fließbecherpistole (Düsenöffnung 1,2 mm; Luftdruck 4,5 bar) in zwei Kreuzgängen auf mit einer handelsüblichen Elektrotauchlackierung beschichtete phosphatierte Stahlbleche gespritzt. Die Applikation erfolgte bei einer Lufttemperatur von 23°C und einer relativen Luftfeuchte von 60%. Die beschichteten Tafeln wurden 10 min bei 23°C und anschließend 10 min bei 80°C in einem Umluftofen liegend abgelüftet und dann 25 min bei 155°C eingebrannt, abgekühlt und der Glanz unter einem Winkel von 60° nach DIN 67530 bestimmt.

Mit steigender Menge an Methyl-Beta-Cyclodextrin nimmt der Glanz zu (Tabelle 2).

**Tabelle 2**

| | | | | | | |
|---|---|---|---|---|---|---|
| Lack | 1 | 2 | 3 | 4 | 5 | 6 (Vergleich) |
| Note | 45 | 55 | 67 | 74 | 82 | 48 |

Mit steigender Menge an Methyl-Beta-Cyclodextrin nimmt der Glanz zu. Die Glanzerhöhung kann nicht durch eine einfache Erhöhung der Bindemittelmenge erzielt werden (vergleiche Lack 3 und 6).

## Patentansprüche

1. Verfahren zur Herstellung eines wasserverdünnbaren Lacks mit verbessertem Glanz und Verlauf enthaltend
a) als Bindemittel vorzugsweise wenigstens ein wasserverdünnbares Polyurethanharz, Polyesterharz, Epoxidharz, acryliertes Polyurethanharz, Mikrogele oder Polyacrylatharz, ausgenommen Latices, oder ein Gemisch zweier oder mehrerer dieser Bindemittel und
b) ggfs. wenigstens einem Vernetzer, vorzugsweise Aminoplastharze oder blockierte Isocyanate,
**dadurch gekennzeichnet**, daß dem Lack Cyclodextrin zugesetzt wird.

2. Verfahren nach Anspruch 1,
**dadurch gekennzeichnet**, daß dem Lack 0,5 bis 20 Gew.-% Cyclodextrin zugesetzt werden.

3. Verfahren nach Anspruch 2,
**dadurch gekennzeichnet**, daß dem Lack 1 bis 10 Gew.-% Cyclodextrin zugesetzt werden.

4. Wasserverdünnbarer Lack zur Herstellung eines Überzugs mit verbessertem Glanz und Verlauf enthaltend
a) als Bindemittel vorzugsweise wenigstens ein wasserverdünnbares Polyurethanharz, Polyesterharz, acrylierte Polyurethanharze oder Mikrogele, Epoxidharz oder Polyacrylatharz, ausgenommen Latices, oder ein Gemisch zweier oder mehrerer dieser Bindemittel und
b) ggfs. Vernetzer, vorzugsweise Aminoplastharze oder blockierte Isocyanate
**dadurch gekennzeichnet**, daß er
c) als weitere Komponente Cyclodextrin enthält.

5. Wasserverdünnbarer Lack nach Anspruch 4,
**dadurch gekennzeichnet**, daß der Gehalt an Cyclodextrin 0,5 bis 20 Gew.-% beträgt.

6. Wasserverdünnbarer Lack nach Anspruch 5,
**dadurch gekennzeichnet**, daß der Gehalt an Cyclodextrin 1 bis 10 Gew.-% beträgt.

7. Wasserverdünnbarer Lack nach einem der Ansprüche 4 bis 6,
**dadurch gekennzeichnet**, daß er als Bindemittel wenigstens ein wasserverdünnbares Polyurethanharz enthält, das herstellbar ist, indem
a) in einer ersten Stufe ein isocyanatgruppenhaltiges Präpolymer (I) hergestellt, und
b) in einer zweiten Stufe ein Teil der in dem Präpolymer (I) enthaltenen freien Isocyanatgruppen mit einem Blockierungsmittel oder einer Mischung aus Blockierungsmitteln umgesetzt werden, so daß ein blockiertes Isocyanatgruppen enthaltendes Präpolymer (II) entsteht.

8. Verfahren zur Lackierung von Automobilkarosserien, bei dem eine Elektrotauchlackschicht, eine Füllerschicht und ein oder zwei Decklackschichten übereinanderlackiert und in mehreren Einbrennschritten nacheinander eingebrannt werden,
**dadurch gekennzeichnet**, daß der Füllerschicht ein wasserverdünnbarer Lack nach einem der Ansprüche 4 bis 7 eingesetzt wird.

9. Verwendung von wasserverdünnbaren Lacken nach einem der Ansprüche 4 bis 7 zur Herstellung der Füllerschicht in einem Verfahren nach Anspruch 8.

10. Verwendung von Cyclodextrin als Mittel zur Verbesserung des Glanzes und des Verlaufes in Überzügen aus wasserverdünnbaren Lacken.
